# EUROPÄISCHE PATENTSCHRIFT

(11) **EP 2 616 708 B1**
(45) Veröffentlichungstag und Bekanntmachung des Hinweises auf die Patenterteilung: **22.04.2015**
(21) Anmeldenummer: 11757613.2
(22) Anmeldetag: 15.09.2011
(51) Int. Cl.: B60G 11/27, F16F 9/04, F16F 9/05

(54) **LUFTFEDER**
AIR SPRING
RESSORT PNEUMATIQUE

(30) Priorität: 17.09.2010 DE 102010040980
(43) Veröffentlichungstag der Anmeldung: 24.07.2013
(73) Patentinhaber: SAF-HOLLAND GmbH, 63856 Bessenbach (DE)
(72) Erfinder: BÜTTNER, Josef, 63857 Waldaschaff (DE)
(74) Vertreter: Müller Schupfner & Partner Patent- und Rechtsanwaltspartnerschaft mbB
(86) Internationale Anmeldenummer: PCT/EP2011/066042
(87) Internationale Veröffentlichungsnummer: WO 2012/035116

(56) Entgegenhaltungen:
- DE-A1- 19 720 776
- GB-A- 1 001 515
- GB-A- 1 248 025

## Beschreibung

Die vorliegende Erfindung betrifft eine Luftfeder, insbesondere für ein Nutzfahrzeug.

Herkömmlicherweise besitzt eine Fahrzeugachse eines Nutzfahrzeuges einen Achskörper, der einseitig mittels zumindest eines Längslenkers ein Achsaggregat bildet und daher am Fahrzeugrahmen beweglich angelenkt ist und gegenüber dem Fahrzeugrahmen durch jeweils eine über oder hinter dem Kreuzungsbereich von Achskörper und Längslenker angeordnete Luftfeder abgestützt ist. Die Luftfeder ihrerseits umfasst einen zwischen einem Deckel und einer Grundplatte angeordneten Luftbalg, wobei für eine mechanische Kopplung zwischen dem Luftbalg einerseits und dem Achsaggregat andererseits ein am Luftbalg angeordneter Tauchkolben vorgesehen ist. Der Luftbalg ist an seinem achsseitigen Bereich mit dem Tauchkolben verbunden, wobei eine Außenfläche des Tauchkolbens dem Luftbalg als Abrollfläche dient, so dass eine geführte Bewegung des Luftbalgs im Betrieb bei der Auf- und Abbewegung des Tauchkolbens gewährleistet ist.

Für eine Kran- und Bahnverladung sind solche Luftfedern, wie z.B. in der EP 1 593 873 A1 offenbart, jedoch nur bedingt geeignet, da durch das Gewicht der dann unter dem Fahrzeug hängenden Achse der Luftbalg ohne weitere Haltevorrichtungen vollständig ausgerollt wird, wodurch in dem Luftbalg ein Unterdruck gegenüber der Umgebung erzeugt wird. Beim Absetzen des Fahrzeugs besteht die Gefahr, dass der Luftbalg nach innen einfaltet bzw. gegen den Tauchkolben verkippt bzw. einfaltet und daher nicht betriebsmäßig über den Tauchkolben abrollt, was Beschädigungen zur Folge haben kann.

Um dieses Problem zu umgehen, wird daher herkömmlicherweise bei der Kran- und Bahnverladung der Federweg der Luftfeder anhand einer an dem Fahrzeugrahmen befestigten Spann- bzw. Fangvorrichtung begrenzt oder ein geteilter Tauchkolben verwendet. Alternativ kann die Luftfeder auch derart ausgebildet sein, dass die Luftfeder lösbar mit dem Aufbau verbunden ist und bei einer Kranverladung des Anhängers mittels eines Rückstellgliedes die Luftfeder von dem Aufbau getrennt wird und mittels des Rückstellgliedes der Deckel und so auch der Federbalg bezüglich des Tauchkolbens in einer definierten Position gehalten werden, so dass der Federbalg über den Tauchkolben abrollt bzw. in einem abgerollten Zustand gehalten wird.

Der Erfindung liegt die Aufgabe zugrunde, eine Luftfeder bereitzustellen, welche in einfacher Weise für eine Kranverladung von Fahrzeugen geeignet ist.

Diese Aufgabe wird gelöst durch eine Luftfeder gemäß Anspruch 1. Vorteilhafte Weiterbildungen der Erfindung sind Gegenstand der abhängigen Ansprüche.

Gemäß der vorliegenden Erfindung wird eine Luftfeder insbesondere eines Nutzfahrzeugs bereitgestellt, mit einem Tauchkolben, einem Luftbalg, der durch eine Ein- bzw. Ausfederbewegung zwischen einer ersten, eingefederten Position und einer zweiten, ausgefederten Position bewegbar ist und einen achsseitigen Bereich mit einem Festlegabschnitt zum Festlegen an dem Tauchkolben und einen aufbauseitigen Bereich aufweist. Die erfindungsgemäße Luftfeder weist des Weiteren einen Deckel auf, wobei der Festlegabschnitt zwischen dem Deckel und dem Tauchkolben festgelegt ist, und wobei der Deckel an seinem Umfangsrand mindestens einen Führungsabschnitt umfasst, der sich vom aufbauseitigen Bereich weg und bis über den Festlegabschnitt hinaus nach außen erstreckt und als Abstützung für den achsseitigen Bereich dient. Der Führungsabschnitt liegt dabei vorzugsweise von oben auf demjenigen Abschnitt des achsseitigen Bereichs auf, der dem Festlegabschnitt benachbart ist, der üblicherweise zwischen dem Deckel und einer entsprechenden Vertiefung bzw. Sicke im oberen Bereich des Tauchkolbens gehaltert, insbesondere geklemmt ist.

Das heißt, falls der achsseitige Bereich des Luftbalgs bei der Ein- und Ausfederbewegung an der Außenseite des Tauchkolbens abrollt, wird er durch den mindestens einen Führungsabschnitt zusätzlich gestützt, wodurch sich eine bessere Kontrolle bzw. Definiertheit des Ab- und Aufrollvorgangs des achsseitigen Bereichs des Luftbalgs und somit eine bessere und sicherere Handhabung der Luftfeder ergibt. Die Oberseite des Tauchkolbens ist dabei dem Deckel benachbart. Unter dem Begriff "Nutzfahrzeug" im Sinne dieser Erfindung sollen nicht nur Zugfahrzeuge wie beispielsweise LKWs oder Sattelzugmaschinen verstanden werden, sondern auch deren Anhänger bzw. Sattelauflieger. Die achsseitige Lagerung der Luftfeder kann unterschiedlich positioniert sein. Die achsseitige Lagerung kann eine Tauchkolbenbefestigung oder ein Luftfederträger sein. Der Luftfederträger kann beispielsweise an einem Lenker des Achsaggregats angeordnet sein. Der achsseitige Bereich des Luftbalgs im Sinne dieser Erfindung ist der Endbereich des Luftbalgs, der mittels des Tauchkolbens und gegebenenfalls weiterer Anordnungsmittel mit der achsseitigen Lagerung der Luftfeder verbunden ist, d.h. der Bereich des Luftbalgs, der an dem Tauchkolben angeordnet ist. Der aufbauseitige Bereich des Luftbalgs ist der Bereich des Luftbalgs, welcher mittels eines Deckels und gegebenenfalls weiterer Anordnungsmittel mit dem Aufbau verbunden ist. Ein erfindungsgemäßer Luftbalg kann sich in verschiedenen Zuständen befinden. In einem Grundzustand des Luftbalgs wirken keine äußeren Fremdkräfte wie beispielsweise Zug-, Schub- und/oder Scherkräfte auf den Luftbalg ein. Insbesondere ist der Grundzustand des Luftbalgs der Zustand, in dem sich der Luftbalg befindet, wenn der in einer Luftfeder eingebaute Luftbalg beispielsweise einmal mittels Pressluft aufgeblasen wird und die Pressluft anschließend wieder aus der Luftfeder abgelassen wird, d.h. dass in dem Inneren der Luftfeder wieder Umgebungsdruck herrscht. Im Grundzustand wird an der Luftfeder nach dem Aufblasen, abgesehen von ihrer eigenen Gewichtskraft, keine weitere Kraft angelegt. Der Luftbalg kann auch verschiedene Betriebszustände aufweisen. Einer dieser Betriebszustände liegt beispielsweise vor, wenn die Luftfeder im herkömmlichen Betrieb angeordnet ist, wobei beispielsweise der Innendruck in dem Luftbalg von dem Umgebungsdruck verschieden ist. Ein solcher Betriebszustand liegt beispielsweise dann vor, wenn sich das Fahrzeug im herkömmlichen Einsatz befindet. Im Einsatz kann der Luftbalg im Zuge von Ein- und Ausfederbewegungen in eine erste Position, in welcher er - ggf. sogar vollständig - eingefedert ist, sowie in eine zweite Position, in welcher er - ggf. sogar vollständig - ausgefedert ist, bewegt werden. Ein anderer Betriebszustand ist ein Zustand, in dem der Luftbalg entlüftet ist, wenn beispielsweise das Gerät, wie z.B. ein Anhänger eines LKWs, an dem die Luftfeder angeordnet ist, für längere Zeit geparkt ist. In diesem Fall herrscht in dem Inneren des Luftbalgs, wie im Grundzustand, der Umgebungsdruck, und der Luftbalg befindet sich in der ersten Position. In diesem Betriebszustand des Luftbalgs ist die Länge der Luftfeder regelmäßig kleiner als die Länge der Luftfeder im Grundzustand des Luftbalgs. Weiterhin kann der Luftbalg einen Verladezustand aufweisen, wobei der Verladezustand dann vorliegt, wenn das Fahrzeug beispielsweise auf einen Eisenbahnwaggon kranverladen wird, d.h. das Achsaggregat an der Luftfeder hängt. In diesem Fall befindet sich der Luftbalg in der zweiten Position. In dem Verladezustand des Luftbalgs ist die Luftfeder entlang ihrer Mittellinie gemessen regelmäßig länger als in dem Grundzustand des Luftbalgs. Wird die Luftfeder im Betriebszustand des Luftbalgs mit einem sehr hohen Innendruck beaufschlagt, ist es auch möglich, dass die Luftfeder die gleichen Abmessungen aufweist wie im Verladezustand des Luftbalgs. Der Luftbalg kann sich auch dann in seinem Grundzustand befinden, wenn er beispielsweise von dem Tauchkolben entkoppelt ist, d.h. beispielsweise der Luftbalg alleine gelagert ist. Wird ein Anhänger, an welchem die Luftfeder angeordnet ist, auf einen Bahnwaggon, eine Fähre oder ähnliches verladen, wird beim Anheben des Anhängers über das Chassis bzw. den Aufbau aufgrund des Achsgewichtes der Luftbalg im Wesentlichen vollständig gestreckt. Dabei wird, wie bereits beschrieben, der achsseitige Bereich des Luftbalgs durch die zusätzliche Abstützung durch den mindestens einen Führungsabschnitt zuverlässig auf- und abgerollt. Somit ist jederzeit ein funktionssicheres Abrollen des Luftbalgs auf dem Tauchkolben auch ohne Druckbeaufschlagung des Luftbalgs gewährleistet. Bei einem Aufsetzen des Anhängers auf den Bahnwaggon bzw. auf die Fähre ist daher der Luftbalg so ausgelegt, dass er automatisch wieder den vor dem Anheben bestehenden Zustand einnimmt. Dieser Zustand kann beispielsweise der Grundzustand sein, wenn insbesondere der Luftbalg entlüftet ist, bzw. ein von dem Grundzustand abweichender Zustand, wenn der Luftbalg zum Beispiel mit einem Innendruck beaufschlagt ist. In anderen Worten kann der Luftbalg bei einer Verladung des Anhängers auf einen Bahnwaggon bzw. eine Fähre beim Anheben des Anhängers im Wesentlichen vollständig gestreckt werden. Wird der Anhänger dann auf dem Bahnwaggon bzw. der Fähre abgesetzt, rollt der Luftbalg über die Außenseite des Tauchkolbens ab, auch wenn lediglich ein geringer Innendruck in dem Luftbalg herrscht. Ein Verkippen bzw. Einfalten des Luftbalgs wird durch den mindestens einen Führungsabschnitt des Deckels verhindert. Vorteilhafterweise ist es erfindungsgemäß daher nicht erforderlich, den maximalen Ausfederweg beim Verladen, beispielsweise mittels eines Fangseils als bevorzugte Fang- bzw. Spannvorrichtung, zu begrenzen. Insbesondere ist es vorteilhafterweise auch nicht erforderlich, den Tauchkolben geteilt auszubilden. Vielmehr werden aufgrund der erfindungsgemäßen Luftfeder die Probleme des Standards der Technik in einfacher Weise gelöst.

Es kann von Vorteil sein, wenn sich der Festlegabschnitt bis mindestens zur radialen Außenseite des Tauchkolbens oder sogar darüber hinaus erstreckt. Dies bietet den Vorteil, dass die Führung des achsseitigen Bereichs des Luftbalgs besonders im Bereich der maximalen Ausfederung besonders gut und präzise ist, da sich hierdurch eine besonders große Kontaktfläche und ein enger Kontakt des mindestens einen Führungsabschnitts mit dem achsseitigen Bereich ergibt.

Erfindungsgemäss ist der Festlegabschnitt des Luftbalgs in jeder Position des Luftbalgs vorzugsweise schräg nach unten gerichtet. Es kann derjenige Bereich des Luftbalgs, der vom Führungsabschnitt positioniert bzw. geführt wird bzw. der zum Führungsabschnitt benachbart ist, in jeder Position des Luftbalgs vorzugsweise schräg nach unten gerichtet sein, also vom aufbauseitigen Bereich weg nach unten und außen.

Die Führung und Abstützung des achsseitigen Bereichs des Luftbalgs zwischen dem mindestens einen Führungsabschnitt und der Oberseite des Tauchkolbens wird dadurch noch weiter verbessert dass der Tauchkolben an seiner Oberseite eine Schrägfläche aufweist, die dem mindestens einen Führungsabschnitt zumindest teilweise entspricht. Der Führungsabschnitt und die Schrägfläche sind zumindest bereichsweise im Wesentlichen parallel zueinander ausgebildet.

Eine besonders einfache Ausgestaltung des Führungsabschnitts ergibt sich dann, wenn er als eine Fläche ausgebildet ist, die bezüglich der Symmetrieachse der Luftfeder rotationssymmetrisch ist. Dies heißt in anderen Worten, dass der Führungsabschnitt als eine vom Rand des Deckels aus nach unten geneigte Ringfläche, beispielsweise als Mantelfläche eines Kegels bzw. Kegelstumpfes, ausgebildet ist.

In einer alternativen Ausgestaltungsform ist der mindestens eine Führungsabschnitt als eine Mehrzahl von Teilflächen ausgebildet, die bezüglich der Symmetrieachse der Luftfeder vorzugsweise in gleichem Umfangswinkelabstand relativ zueinander angeordnet sind. Die einzelnen Führungsabschnitte sind dabei beispielsweise wie Blütenblätter einer Blüte - jeweils mit ihren Außenrändern nach unten geneigt, wenn von einer normalen Einbauposition des Deckels bzw. der Luftfeder ausgegangen wird - ausgebildet. In diesem Zusammenhang ist zu erwähnen, dass eine derartige Luftfeder üblicherweise größtenteils rotationssymmetrisch zu einer Symmetrieachse ist, was jedoch nicht für jedes Einzelteil gilt. Somit sind die einzelnen Führungsabschnitte streng genommen nicht rotationssymmetrisch zur Symmetrieachse.

Es kann von Vorteil sein, wenn der mindestens eine Führungsabschnitt einen krümmungslosen Teilabschnitt umfasst, der in einem Winkel α von etwa 0° bis 70° bezüglich der Symmetrieachse der Luftfeder angeordnet ist. Vorzugsweise beträgt der Winkel α jedoch etwa zwischen 20° und 50°, wobei ein Winkel von etwa 35° - 45° besonders bevorzugt ist. Somit kann der mindestens eine Führungsabschnitt in idealer Weise an die Form der Oberseite des Tauchkolbens angepasst und hinsichtlich seiner Führungs- und Stützeigenschaften optimiert werden.

Es ist vorteilhaft, wenn sich der mindestens eine Führungsabschnitt über einen Bereich von etwa 10 % bis 40 %, vorzugsweise etwa 15 % bis 35 % und insbesondere etwa 20% bis 30% der radialen Ausdehnung des Tauchkolbens erstreckt. Auf diese Weise lassen sich die Führungs- und Stützeigenschaften des mindestens einen Führungsabschnitts optimieren.

Es kann von Vorteil sein, wenn der Deckel radial innerhalb des mindestens einen Führungsabschnitts eine zumindest im Wesentlichen plane Fläche bildet. In anderen Worten ist in dem Deckel kein Rücksprung nach unten vorgesehen, sondern dieser ist eben.

Alternativ kann der Deckel radial innerhalb des mindestens einen Führungsabschnitts zumindest bereichsweise konkav ausgebildet sein. Hierbei kann sich die Wölbung in den Luftbalg hinein erstrecken. Bevorzugt ist die Wölbung jedoch vom Inneren des Luftbalgs nach außen orientiert.

Wenn der mindestens eine Führungsabschnitt an seinem radial äußeren Ende eine sich zum aufbauseitigen Bereich zurückkrümmende Abrundung bzw. Bereich aufweist, liegt dieses Ende besonders gut und "weich", das heißt, ohne Gefahr von Verletzungen, an dem achsseitigen Bereich des Luftbalgs an und führt diesen besonders gut. Diese Eigenschaften können noch verbessert werden, wenn die Abrundung eine Hohlkehle darstellt, die nach oben hin - also zum aufbauseitigen Bereich hin - offen ist. Daher kann bei dieser Ausführungsform der Luftbalg sich an die Hohlkehle anschmiegen und wird dadurch besonders gut geführt und gestützt.

Weitere Vorteile und Merkmale der Erfindung ergeben sich aus der nachfolgenden Beschreibung von vorteilhaften Ausführungsformen mit Bezug auf die beigefügten Figuren, wobei einzelne Merkmale von einzelnen Ausführungsformen zu neuen Ausführungsformen kombiniert werden können. Es zeigen:
- Fig. 1: eine schematische Schnittansicht einer ersten Ausführungsform der erfindungsgemäßen Luftfeder in eingefederter Position;
- Fig. 2: eine schematische Schnittansicht einer zweiten Ausführungsform der erfindungsgemäßen Luftfeder in eingefederter Position;
- Fig. 3: eine schematische Schnittansicht der zweiten Ausführungsform in ausgefederter Position;
- Fig. 4: eine schematische Schnittansicht einer dritten Ausführungsform der erfindungsgemäßen Luftfeder in eingefederter Position; und
- Fig. 5: eine schematische Schnittansicht der dritten Ausführungsform in ausgefederter Position.

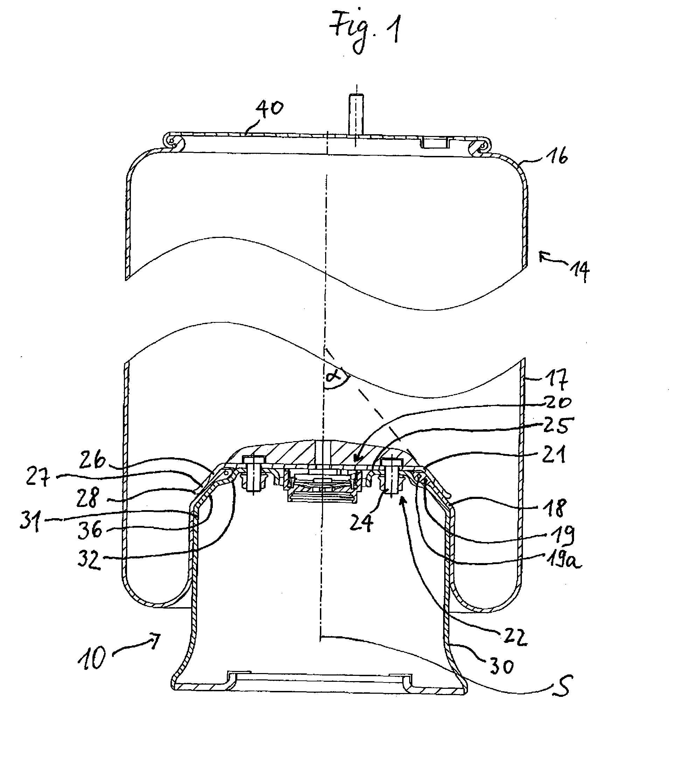

Fig. 1 zeigt eine erfindungsgemäße Luftfeder 10. Die Luftfeder 10 umfasst einen Tauchkolben 30 sowie einen Luftbalg 14. Der Tauchkolben 30 kann aus einem beliebigen Material ausgebildet sein, beispielsweise Kunststoff oder Metall, wie Stahl. Der Luftbalg weist einen aufbauseitigen Abschnitt bzw. aufbauseitigen Bereich 16 sowie einen achsseitigen Abschnitt bzw. achsseitigen Bereich 18 auf. Zwischen dem achsseitigen Bereich 18 und dem aufbauseitigen Bereich 16 ist ein Mittelabschnitt 17 vorgesehen.

Der aufbauseitige Abschnitt 16 ist anhand eines Deckels 40 geschlossen. Der Deckel 40 kann beispielsweise mit einem Aufbau eines Anhängers (in den Figuren nicht gezeigt) verbunden sein.

Der achsseitige Bereich 18 des Luftbalgs 14 endet in einem Festlegabschnitt 19, der einen verdickten Ring bildet, in dem ein Verstärkungsring 19a eingelassen ist. An der Oberseite 31 des Tauchkolbens 30 befindet sich eine Ringsicke 32, in welche der Festlegabschnitt 19 eingesetzt ist. Zum Verschluss des Tauchkolbens 30 ist auf seine Oberseite 31 ein Deckel 20 aufgesetzt, der in seinem zentralen Bereich eine ebene Fläche 25 bildet.

Am Umfangsrand 21 der ebenen Fläche 25 setzt sich der Deckel 20 in einem Führungsabschnitt 26 fort, der in Form einer Kreisringfläche ausgebildet ist, deren äußerer Rand nach unten, also vom aufbauseitigen Bereich 16 weg, geneigt ist. Genauer gesagt bildet der Führungsabschnitt 26 einen Teil einer Kegelfläche.

An das radial äußere Ende 27 des Führungsabschnitts 26 schließt sich eine relativ schwach gekrümmte, zum aufbauseitigen Bereich 16 hin offene Abrundung 28 an, die zum aufbauseitigen Bereich 16 zurückgekrümmt ist. Der Führungsabschnitt 26 bildet dabei einen Winkel α von etwa 40° zur Symmetrieachse der Luftfeder 10. Bezüglich der gesamten radialen Ausdehnung des Deckels 20 nimmt der Führungsabschnitt 26 etwa ein Viertel hiervon ein, wobei die Abrundung 28 nicht mitgerechnet ist.

Die Anordnung ist so getroffen, dass der Festlegabschnitt 19 und der daran angrenzende Abschnitt des achsseitigen Bereichs des Luftbalgs 14 zwischen dem Führungsabschnitt 26 und einer Schrägfläche 36 des Tauchkolbens 30, die unterhalb der Ringsicke 32 gebildet ist, zu liegen kommt. Der Festlegabschnitt 19 ist somit zwischen dem Führungsabschnitt 26 und der Schrägfläche 36 gehaltert, üblicherweise geklemmt. Die Klemmung wird durch eine Klemmvorrichtung 22 bewirkt, welche mittels Verbindungsmitteln 24, wie insbesondere Schrauben und Muttern, den Deckel 20 mit dem Tauchkolben 30 verbindet bzw. verschraubt. Hierdurch wird eine feste, jedoch lösbare Verbindung zwischen dem Luftbalg 14 und dem Tauchkolben 30 gewährleistet. Ansonsten ist der Tauchkolben 30 herkömmlicher Art, wie er bei herkömmlichen Luftfedern 10 eingesetzt wird. Die grundlegende Ausgestaltung des Luftbalgs 14 ist ebenfalls herkömmlich, wie sie aus herkömmlichen Luftfedern 10 bekannt ist, wobei der Luftbalg 14 in einfacher Weise von dem Tauchkolben 30 entfernt werden kann, indem beispielsweise die Schrauben und Muttern 24 zumindest teilweise gelöst werden und die Klemmvorrichtung 22 von dem Tauchkolben 30 beabstandet wird. Folglich wird der Festlegabschnitt 19 des Luftbalgs 14 nicht mehr zwischen der Klemmvorrichtung 22 und dem Tauchkolben 30 eingeklemmt, und der Luftbalg 14 kann entfernt sowie beispielsweise durch einen neuen Luftbalg 14 ersetzt werden.

Erfindungsgemäß ist somit der achsseitige Bereich 18 des Luftbalgs 14 in der Nachbarschaft des Festlegabschnitts 19 jederzeit, insbesondere aber beim Auf- und Abrollen des Luftbalgs während einer Ein- bzw. Ausfederbewegung, sicher geführt und gehaltert.

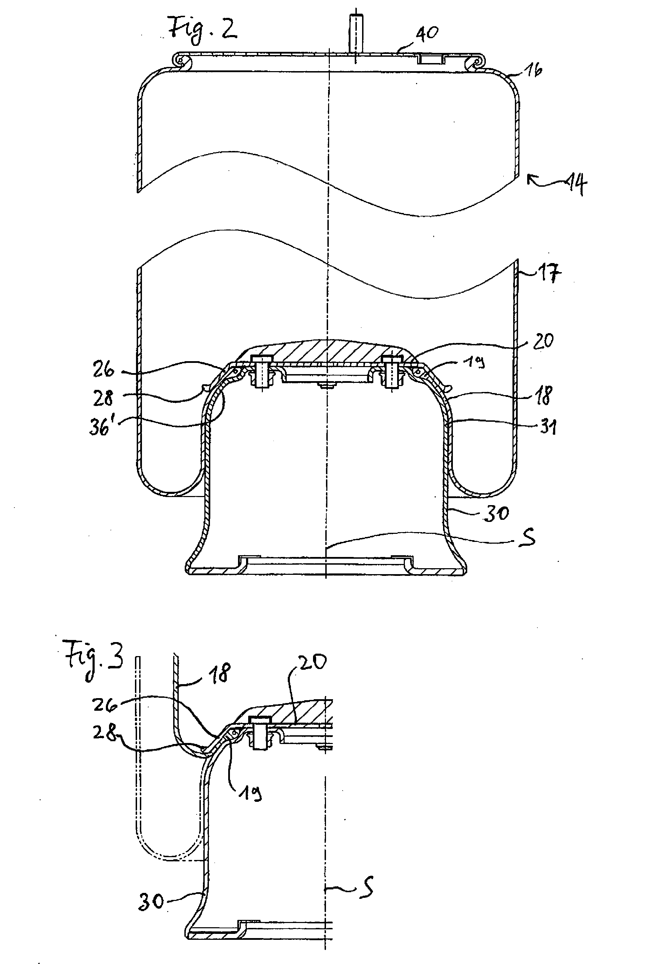

Die Fig. 2 - 5 zeigen zwei weitere vorteilhafte Ausführungsformen der Erfindung. In diesen Figuren sind gleiche oder ähnliche Teile mit gleichen bzw. ähnlichen Bezugszeichen versehen, und zur Vermeidung von Wiederholungen wird auf deren erneute Erläuterung verzichtet. Die hinsichtlich der ersten Ausführungsform getroffenen Äußerungen gelten auch für die weiteren Ausführungsformen, außer dies ist ausdrücklich anders dargestellt oder verbietet sich aus technischen Gründen von selbst.

Fig. 2 und 3 zeigen eine zweite Ausführungsform der erfindungsgemäßen Luftfeder. Die zweite Ausführungsform unterscheidet sich von der ersten Ausführungsform einerseits dadurch, dass der Tauchkolben 30 an seiner Oberseite 31 nicht wie bei der ersten Ausführungsform eine lineare bzw. ebene Schrägfläche 36 aufweist, sondern eine gekrümmte, jedoch ebenfalls schräge Fläche 36'. Somit ist der Tauchkolben 30 bei dieser Ausführungsform an seiner Oberseite nach Art einer Glocke ausgebildet. Wie in einfacher Weise aus Fig. 1 und 2 ersichtlich, ist die vorliegende Erfindung bei verschiedenen Ausgestaltungen von Tauchkolben einsetzbar und ist nicht von einer bestimmten Gestaltung der Oberseite des Tauchkolbens abhängig. Andererseits unterscheidet sich die zweite Ausführungsform von der ersten dadurch, dass die sich an das radial äußere Ende 27 des Führungsabschnitts 26 anschließende Abrundung 28 als Hohlkehle ausgebildet ist, die zum aufbauseitigen Bereich 16 hin offen ist. Die entsprechende Abrundung 28 bei der ersten Ausführungsform ist dagegen wesentlich schwächer gekrümmt und damit weniger stark ausgeprägt als bei der zweiten Ausführungsform. Wie aus Fig. 3 ersichtlich, welche die erfindungsgemäße Luftfeder in weitgehend ausgefedertem Zustand zeigt, liegt der achsseitige Bereich 18 des Luftbalgs 14 in diesem Zustand eng an der Abrundung 28 an und wird von dieser noch besser geführt und gestützt als bei der ersten Ausführungsform.

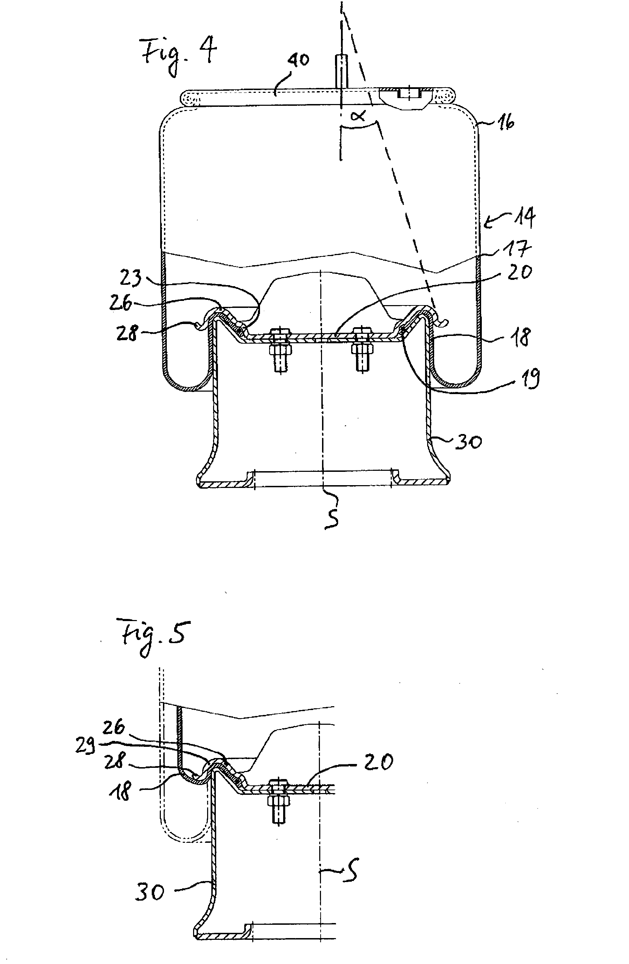

Die Fig. 4 und 5 zeigen eine dritte Ausführungsform der erfindungsgemäßen Luftfeder. Anders als bei den ersten beiden Ausführungsformen ist der Deckel 20 in seinem zentralen Bereich nicht als ebene Fläche 25 ausgebildet, sondern bildet einen Rücksprung nach unten, also vom aufbauseitigen Bereich 16 weg. Wie ersichtlich, erstreckt sich der Führungsabschnitt 26 über den Festlegabschnitt 19 des achsseitigen Bereichs 18 hinaus und bildet in diesem Bereich nach radial außen eine zum aufbauseitigen Bereich 16 hin ansteigende Fläche, die sich radial noch weiter außen in einem Abschnitt 29 fortsetzt, der vom aufbauseitigen Bereich 16 weg (also nach unten) gekrümmt ist. Dadurch wird der Tauchkolben 30 an seiner Oberseite 31 umgriffen, und der achsseitige Bereich 18 wird zwischen dem Führungsabschnitt 26 mit dem Abschnitt 29 und der Oberseite 31 des achsseitigen Bereichs 18 des Luftbalgs 14 besonders gut gestützt und geführt. Das radial äußerste Ende des Führungsabschnitts 26, d.h. seines Abschnitts, ist in Form einer umlaufenden Abrundung 28 in Form einer nach oben offenen Hohlkehle ausgestaltet, die noch deutlicher ausgeprägt ist als bei der zweiten Ausführungsform. Wie aus Fig. 5 ersichtlich, liegt der achsseitige Bereich 18 des Luftbalgs 14 im vollständig oder fast vollständig ausgefederten Zustand der Luftfeder 10 sehr eng und großflächig an der Unterseite der Abrundung 28 an und wird dadurch sicher und präzise von der Abrundung 28 geführt und gestützt. Der schräg nach unten weisende Abschnitt 29 des Führungsabschnitts 26 - also derjenige Abschnitt unmittelbar radial innerhalb der Abrundung 28 - ist sehr steil angeordnet und weist nur einen Winkel α von etwa 10 - 20° zur Symmetrieachse S auf.

Im Unterschied zu den ersten beiden Ausführungsformen ist bei der dritten Ausführungsform der erfindungsgemäßen Luftfeder 10 nicht an der Oberseite des Tauchkolbens 30, sondern im Deckel 20 eine Ringsicke 23 vorgesehen, in welche der Festlegabschnitt 19 des äußeren Bereichs 18 des Luftbalgs 14 zu liegen kommt.

Es ist festzuhalten, dass erfindungsgemäß bei allen Ausführungsformen der achsseitige Bereich 18 des Luftbalgs 14 in der Nachbarschaft des Festlegabschnitts 19 jederzeit, insbesondere aber beim Auf- und Abrollen des Luftbalgs während einer Ein- bzw. Ausfederbewegung, geführt und gehaltert ist.

### Bezugszeichenliste

- 10: Luftfeder
- 14: Luftbalg
- 16: aufbauseitiger Bereich
- 17: Mittelabschnitt
- 18: achsseitiger Bereich
- 19: Festlegabschnitt
- 19a: Verstärkungsring
- 20: Deckel
- 21: Umfangsrand
- 22: Klemmvorrichtung
- 23: Ringsicke
- 24: Verbindungsmittel/Schrauben und Muttern
- 25: plane Fläche
- 26: Führungsabschnitt
- 26': Führungsabschnitt
- 27: radial äußeres Ende
- 28: Abrundung
- 29: Abschnitt
- 30: Tauchkolben
- 31: Oberseite
- 32: Ringsicke
- 36: Schrägfläche
- 36': schräge Fläche
- 40: Deckel
- α: Winkel
- S: Symmetrieachse

## Patentansprüche

1. Luftfeder (10), insbesondere für ein Nutzfahrzeug, umfassend einen Tauchkolben (30), einen Luftbalg (14) und einen Deckel (20),
wobei der Luftbalg (14) durch eine Ein- bzw. Ausfederbewegung zwischen einer ersten, eingefederten, Position und einer zweiten, ausgefederten, Position bewegbar ist,
wobei der Luftbalg (14) einen achsseitigen Bereich (18) mit einem Festlegabschnitt (19) zum Festlegen an dem Tauchkolben (30) und einen aufbauseitigen Bereich (16) aufweist,
wobei der Festlegabschnitt (19) zwischen dem Deckel (20) und dem Tauchkolben (30) festgelegt ist,
wobei der Deckel (20) an seinem Umfangsrand (21) mindestens einen Führungsabschnitt (26) aufweist, der sich vom aufbauseitigen Bereich (16) weg und bis über den Festlegabschnitt (19) hinaus nach außen erstreckt und als Abstützung für den achsseitigen Bereich (18) dient,
wobei der Festlegabschnitt (19) des Luftbalgs (14) in jeder Position des Luftbalgs (14) schräg nach unten gerichtet ist,
wobei der Tauchkolben (30) an seiner Oberseite (31) eine dem mindestens einen Führungsabschnitt (26) zumindest teilweise entsprechende Schrägfläche (36) aufweist, sodass der Führungsabschnitt (26) und die Schrägfläche (36) zumindest bereichsweise im Wesentlichen parallel zueinander ausgebildet sind **dadurch gekennzeichnet, dass** der mindestens eine Führungsabschnitt (26) einen krümmungslosen Teilabschnitt (27) umfasst, der in einem Winkel (α) von etwa 20° - 70°, bezüglich der Symmetrieachse (S) der Luftfeder (10) angeordnet ist.

2. Luftfeder (10) nach Anspruch 1, wobei sich der Festlegabschnitt (19) bis mindestens zur radialen Außenseite des Tauchkolbens (30) erstreckt.

3. Luftfeder (10) nach einem der Ansprüche 1 oder 2, wobei der Führungsabschnitt (26) als Fläche ausgebildet ist, die bezüglich der Symmetrieachse (S) der Luftfeder (10) rotationssymmetrisch ist.

4. Luftfeder (10) nach einem der Ansprüche 1 oder 2, wobei der mindestens eine Führungsabschnitt (26) als eine Mehrzahl von Teilflächen ausgebildet ist, die bezüglich der Symmetrieachse (S) der Luftfeder (10) vorzugsweise in gleichem Umfangswinkelabstand relativ zueinander angeordnet sind.

5. Luftfeder (10) nach einem der vorhergehenden Ansprüche, wobei der krümmungslose Teilabschnitt (27) in einem Winkel (α) von etwa 20° - 50° und bevorzugt etwa 35° - 45°, bezüglich der Symmetrieachse (S) der Luftfeder (10) angeordnet ist.

6. Luftfeder (10) nach einem der vorhergehenden Ansprüche, wobei sich der mindestens eine Führungsabschnitt (26) über einen Bereich von etwa 10 - 40 %, vorzugsweise etwa 15 - 35 % und insbesondere etwa 20 - 30 %, der radialen Ausdehnung des Tauchkolbens (30) erstreckt.

7. Luftfeder (10) nach einem der vorhergehenden Ansprüche, wobei der Deckel (20) radial innerhalb des mindestens einen Führungsabschnitts (26) eine zumindest im Wesentlichen plane Fläche (25) bildet.

8. Luftfeder (10) nach einem der Ansprüche 1 - 6, wobei der Deckel (20) radial innerhalb des mindestens einen Führungsabschnitts (26) zumindest bereichsweise konkav ausgebildet ist.

9. Luftfeder (10) nach einem der vorhergehenden Ansprüche, wobei der mindestens eine Führungsabschnitt (26) an seinem radial äußeren Ende (27) einen sich zum aufbauseitigen Bereich (16) zurück krümmenden Bereich bzw. Abrundung (28) aufweist, welche vorzugsweise eine zum aufbauseitigen Bereich (16) hin offene Hohlkehle bildet.

## Claims

1. An air spring (10), in particular for a commercial vehicle, comprising a plunger piston (30), an air bellows (14), and a cover (20),
wherein the air bellows (14) is movable between a first compressed position and a second extended position by a compressing or extending movement, respectively,
wherein the air bellows (14) has an axle-side region (18) with a fixing portion (19) for fixing on the plunger piston (30), and a body-side region (16), wherein the fixing portion (19) is fixed between the cover (20) and the plunger piston (30),
wherein the cover (20) has at least one guiding portion (26) on its circumferential edge (21), said guiding portion (26) extending away from the body-side region (16) and outwards beyond the fixing portion (19) and serving as a support for the axle-side region (18),
wherein the fixing portion (19) of the air bellows (14) in each position of the air bellows (14) is directed diagonally downwards,
wherein the plunger piston (30) at its upper side (31) comprises an inclined surface (36) which at least partially corresponds to the at least one guiding portion (26) so that the guiding portion (26) and the inclined surface (36) at least in certain areas are designed to be essentially parallel to one another, **characterized in that** the at least one guiding portion (26) comprises a curveless partial portion (27) which is arranged at an angle (α) of about 20-70° with respect to the axis of symmetry (S) of the air spring (10).

2. The air spring (10) of claim 1, wherein
the fixing portion (19) extends up to at least the radial outer side of the plunger piston (30).

3. The air spring (10) of any one of claims 1 or 2, wherein
the guiding portion (26) is designed as a surface which is rotationally symmetrical with respect to the axis of symmetry (S) of the air spring (10).

4. The air spring (10) of any one of claims 1 or 2, wherein
the at least one guiding portion (26) is designed as a plurality of partial surfaces which with respect to the axis of symmetry (S) of the air spring (10) are arranged preferably at the same circumferential angle distance relative to one another.

5. The air spring (10) of any one of the preceding claims, wherein
the curveless partial portion (27) is arranged at an angle (α) of about 20°-50°, and preferably about 35°-45°, with respect to the axis of symmetry (S) of the air spring (10).

6. The air spring (10) of any one of the preceding claims, wherein
the at least one guiding portion (26) extends over a range of about 10-40%, preferably about 15-35%, and in particular about 20-30%, of the radial expansion of the plunger piston (30).

7. The air spring (10) of any one of the preceding claims, wherein
the cover (20) radially within the at least one guiding portion (26) forms an essentially plane surface (25).

8. The air spring (10) of any one of claims 1- 6, wherein
the cover (20) radially within the at least one guiding portion (26) is designed concavely at least in certain areas.

9. The air spring (10) of any one of the preceding claims, wherein
the at least one guiding portion (26) at its radial outer end (27) comprises a region or rounding (28) which curves backwards towards the body-side region (16), which rounding preferably forms a chamfer which is open towards the body-side region (16).

## Revendications

1. Ressort pneumatique (10), en particulier pour un véhicule automobile, comprenant
un piston plongeur (30), un soufflet pneumatique (14) et un couvercle (20), dans lesquels le soufflet pneumatique (14) est déplaçable par un mouvement de rétraction ou de déploiement entre une première position rétractée et une seconde position déployée,
dans lequel le soufflet pneumatique (14) comporte une zone côté essieu (18) avec une portion d'immobilisation (19) pour l'immobilisation sur le piston plongeur (30) et une zone côté superstructure (16),
la portion d'immobilisation (19) étant immobilisée entre le couvercle (20) et le piston plongeur (30),
dans lequel le couvercle (20) comporte à sa bordure périphérique (21) au moins une portion de guidage (26) qui s'étend en éloignement de la zone côté superstructure (16) vers l'extérieur jusqu'au-delà de la portion d'immobilisation (19) et qui sert de soutien pour la zone côté essieu (18),
dans lequel la portion d'immobilisation (19) du soufflet pneumatique (14) est orientée en oblique vers le bas dans chaque position du soufflet pneumatique (14), dans lequel le piston plongeur (30) comporte à sa face supérieure (31) une surface oblique (36) correspondant au moins partiellement à ladite au moins une portion de guidage (26), de sorte que la portion de guidage (26) et la surface oblique (36) sont réalisées au moins localement sensiblement parallèlement l'une à l'autre, **caractérisé en ce que**
ladite au moins une portion de guidage (26) comprend une portion partielle (27) sans courbure, qui est agencée sous un angle (□) d'environ 20° à 70° par rapport à l'axe de symétrie (S) du ressort pneumatique (10).

2. Ressort pneumatique (10) selon la revendication 1, dans lequel la portion d'immobilisation (19) s'étend au moins jusqu'à la face extérieure radiale du piston plongeur (30).

3. Ressort pneumatique (10) selon l'une des revendications 1 ou 2, dans lequel la portion de guidage (26) est réalisée sous la forme d'une surface qui présente une symétrie de révolution par rapport à l'axe de symétrie (S) du ressort pneumatique (10).

4. Ressort pneumatique (10) selon l'une des revendications 1 ou 2, dans lequel ladite au moins une portion de guidage (26) est réalisée comme une pluralité de surfaces partielles qui sont agencées les unes par rapport aux autres de préférence à une même distance angulaire périphérique par référence à l'axe de symétrie (S) du ressort pneumatique (10).

5. Ressort pneumatique (10) selon l'une des revendications précédentes, dans lequel la portion partielle sans courbure (27) est agencée sous un angle (α) d'environ 20° à 50°, et de préférence environ 35° à 45° par rapport à l'axe de symétrie (S) du ressort pneumatique (10).

6. Ressort pneumatique (10) selon l'une des revendications précédentes, dans lequel ladite au moins une portion de guidage (26) s'étend sur une plage d'environ 10 à 40 %, de préférence environ 15 à 35 %, et en particulier environ 20 à 30 % de l'extension radiale du piston plongeur (30).

7. Ressort pneumatique (10) selon l'une des revendications précédentes, dans lequel le couvercle (20) forme, radialement à l'intérieur de ladite au moins une portion de guidage (26), une surface (25) au moins sensiblement plane.

8. Ressort pneumatique (10) selon l'une des revendications 1 à 6, dans lequel le couvercle (20) est réalisé au moins localement concave, radialement à l'intérieur de ladite au moins une portion de guidage (26).

9. Ressort pneumatique (10) selon l'une des revendications précédentes, dans lequel ladite au moins une portion de guidage (26) comporte, à son extrémité radialement extérieure (27), une zone ou un arrondi (28) recourbé(e) en retour vers la zone côté superstructure (16), laquelle/lequel forme de préférence un étranglement creux ouvert vers la zone côté superstructure (16).
